# EUROPÄISCHE PATENTSCHRIFT

(11) **EP 2 331 435 B1**
(45) Veröffentlichungstag und Bekanntmachung des Hinweises auf die Patenterteilung: **29.04.2015**
(21) Anmeldenummer: 09748953.8
(22) Anmeldetag: 24.09.2009
(51) Int. Cl.: B65G 49/06, B65B 5/10

(54) **VERFAHREN UND VORRICHTUNG ZUM BELADEN EINES BEHÄLTERS MIT PRODUKTEN AUS GROSSFLÄCHIG DÜNNEN GLASSCHEIBEN**
PROCESS AND APPARATUS TO STORE LARGE AND THIN GLASS SHEETS
PROCÉDÉ ET APPAREIL POUR STOCKER DES FEUILLES DE VERRE LARGES ET FINES

(30) Priorität: 02.10.2008 DE 102008050221
(43) Veröffentlichungstag der Anmeldung: 15.06.2011
(73) Patentinhaber: Grenzebach Maschinenbau GmbH, 86663 Asbach-Bäumenheim (DE)
(72) Erfinder: WEIGL, Helmut, 94315 Straubing (DE)
(74) Vertreter: Kindermann, Peter
(86) Internationale Anmeldenummer: PCT/DE2009/001353
(87) Internationale Veröffentlichungsnummer: WO 2010/037366

(56) Entgegenhaltungen:
- EP-A1- 0 506 198
- EP-A1- 1 473 261
- DE-A1- 4 428 897
- DE-A1- 19 600 348
- US-A- 5 738 482
- US-A1- 2008 079 217

## Beschreibung

Die Erfindung betrifft eine Vorrichtung und ein Verfahren zum Beladen eines Behälters mit Produkten aus großflächigen dünnen Glasscheiben unter Reinraumbedingungen, sowie ein Computerprogramm und einen maschinenlesbaren Träger mit einem Programmcode zur Durchführung des Verfahrens.

Bei einem solchen Produkt kann es sich zum Beispiel um einen modernen Flachbildschirm oder Glasscheiben als Teile von Flachbildschirmen, eines so genannten TFT-Bildschirms, handeln. TFT steht hierbei für:" Thin Film Transistor. Bei den TFT, s handelt es sich um kleinste Transistor-Elemente, welche die Ausrichtung von Flüssigkristallen und damit deren Lichtdurchlässigkeit steuern. Für Standard-Büroanwendungen haben Flachbildschirme eine hervorragende Schärfe und besitzen eine ausreichende Farbqualität. Auch ergonomisch haben solche so genannten TFT, s viel zu bieten: weniger Platzbedarf, eine Leistungsaufnahme von nur einem Drittel eines Röhrenmonitors und eine wesentlich geringere Strahlenemission.

Für die Herstellung von TFT-Bildschirmen sind, wie in der Mikroelektronik üblich, so genannte Reinräume, bzw. bei der Aufbringung von Leitungsstrukturen Reinsträume, erforderlich. Dies ist deshalb notwendig, da in Anbetracht der geringen Größe der leitungsführenden Strukturen während des Fertigungsprozesses auch Partikel von geringer Größe Leitungsunterbrechungen verursachen können. Im Falle der Fertigung eines TFT-Bildschirms hätte eine solche Leitungsunterbrechung den Ausfall eines Bildpunktes zur Folge.
Deshalb erfordert die Herstellung solcher Bildschirme Reinstraum-Bedingungen.

Ein Reinraum, bzw. ein Reinstraum, ist ein Raum, in dem die Konzentration luftgetragener Teilchen geregelt wird. Er ist so konstruiert und wird so verwendet, dass die Anzahl der in den Raum eingeschleppten bzw. im Raum entstehenden und abgelagerten Partikel kleinstmöglich ist und andere Parameter wie Temperatur, Feuchte oder Luftdruck nach Bedarf geregelt werden.

Einerseits werden die TFT-Bildschirme zurzeit immer preiswerter, andererseits zeichnet sich zunehmend der Bedarf nach Bildschirmen von gigantischen Ausmaßen ab. Dies umso mehr als sich solche Bildschirme einerseits sehr leicht bei Großveranstaltungen verwenden lassen und andererseits durch die moderne Fertigungstechnik in erschwinglichen Preisklassen liegen.

Die Fertigung von Großbildschirmen erfordert jedoch gerade in Reinräumen bzw. Reinsträumen besondere Maschinen zur Handhabung der hierbei benötigten großflächigen dünnen Glasplatten.

Andererseits kann es sich bei einem solchen Produkt aus großflächigen Glasplatten um so genannte photovoltaische Module oder Glasscheiben als Teile von photovoltaischen Modulen handeln.

Moderne Glasfassaden sind vielfach nicht nur ein Funktionselement eines Baukörpers sondern dienen zunehmend auch zur solaren Strömerzeugung. Maßgeschneiderte Solarmodule ermöglichen die passgenaue Integration in Bauwerksraster und Profile. Semitransparente Solarzellen, aber auch opake Solarzellen mit transparenten Bereichen, lassen Photovoltaik-Verglasungen lichtdurchflutet erscheinen. Die Solarzellen übernehmen dabei häufig den gewünschten Effekt des Sonnen-und Blendschutzes.

Die Herstellung von solchen Photovoltaik-Anlagen erfordert Arbeitsbedingungen wie sie vor allem bei der Herstellung von Halbleitern und integrierten elektronischen Schaltungen üblich sind. Die Herstellung photovoltaischer Anlagen ist deshalb noch relativ teuer. Es besteht somit das Bestreben die Herstellung photovoltaischer Elemente in großen Serien herzustellen und die Kosten zu reduzieren. Bei einem photovoltaischen Modul handelt es sich, von außen betrachtet, um die Verbindung einer Substratplatte aus Glas, eines photovoltaischen Elements und einer Glasplatte als Deckglas mittels einer, unter Wärmeeinwirkung diese Glasplatten verklebenden, Folie.

Aus der DE 694 05 904 T2 ist im Wesentlichen eine Glasscheibenlade- und Kippmaschine zum aufeinander folgenden Abnehmen von Glasscheiben von einem Stapel übereinander geschichteter Glasscheiben, die im Wesentlichen in vertikalen Ebenen in einem Gestell angeordnet sind, bekannt. Hierbei sollen die Glasscheiben zum Transport und Kippen der Glasscheiben auf eine im Wesentlichen horizontale Tragkonstruktion verbracht werden, wobei die Maschine als wesentlichen Bestandteil über mindestens einen Rahmen verfügt , der um eine horizontale, zu den Glasscheiben des Stapels parallele Achse schwenkbar ist und der Saugelemente aufweist, die mit der Oberfläche der Scheiben in Kontakt bringbar sind, wobei der Rahmen an der Tragkonstruktion durch mindestens eine ausfahrbare Stange befestigt ist. Bei einer solchen Maschine soll im Wesentlichen unter Schutz gestellt werden, dass sie Vorrichtungen aufweist, um die horizontale Achse des schwenkbaren Rahmens im Wesentlichen nach oben und zum Inneren der Tragkonstruktion hin zu versetzen.

Die besondere Behandlung großflächiger dünner Glasscheiben im Reinraum und das Beladen eines Behälters sind hier nicht behandelt.

Aus der DE 196 00 348 A1 ist eine Regalanlage für Platten und Restplatten bekannt, die ein teil- oder vollautomatisches Ver- und Entsorgen der Platten vom Regal zur Bearbeitungsstation und umgekehrt und ein definiertes Lagern und Auffinden der Restplatten für die spätere Nutzung in Platz sparender Weise ermöglichen soll. Zu diesem Zweck soll im Wesentlichen ein Regal zur stehenden Plattenlagerung und ein Materialfahrzeug mit Plattenaufnahme zur Platten-Ein- und Auslagerung in Abhängigkeit von dem für die weitere Bearbeitung nutzbaren Plattenformat rechnergesteuert unter Schutz gestellt werden.

In der EP 1473 261 A1 ist eine Regalanlage zum Lagern von Glasplattenteilen beliebiger Größe und eine Tafelbearbeitungsanlage ausgerüstet mit einer solchen Regalanlage beschrieben.

Aus der US 2008/0079217 A1 ist eine Vorrichtung zur Handhabung von Glasscheibenprodukten bekannt.

In der US 5738482 ist eine Einrichtung mit Saugköpfen zum Greifen und Transportieren von großen Platten beschrieben.

Ferner ist aus der DE 601 00 297 T2 eine Anlage zum Sortieren und Überführen von Glasscheiben bekannt, wobei die Anlage eine Anzahl von Wagen, von denen jeder eine Anzahl von Fächern jeweils zur Aufnahme mindestens einer entsprechenden Glasscheibe aufweist, und Sortiermittel zum Abstützen der Scheiben und zum Zuführen der Scheiben in ein entsprechendes Fach aufweist.

Bei einer solchen Anlage soll unter Schutz gestellt werden, dass die Sortiermittel Dreh-Abstützmittel aufweisen, die sich um eine Drehachse drehen, und dass die Wagen in einem Ring um die Dreh-Abstützmittel angeordnet sind.

In dieser Druckschrift wird das Sortieren verschiedener Glasplatten bewirkt, das Beladen von großflächigen dünnen Glasscheiben im Reinraum wird jedoch nicht behandelt.

Der vorliegenden Erfindung liegt deshalb die Aufgabe zugrunde, eine Vorrichtung und ein Verfahren anzugeben, womit ein Behälter zur Aufnahme mehrerer großflächiger dünner Glasscheiben unter Reinraum-Bedingungen beladen und entladen werden kann, defekte Glasscheiben erkannt und diese defekten Glasscheiben leicht und sicher entfernt werden können, wobei der Behälter selbst keine eigene Kraftquelle erfordert.

Diese Aufgabe wird mit hinsichtlich der Vorrichtung durch die Merkmale nach Anspruch 1 und hinsichtlich des Verfahrens durch die Maßnahmen nach Anspruch 7 gelöst.

In den Unteransprüchen sind weiter vorteilhafte Ausführungsbeispiele der Erfindung gekennzeichnet.

Die erfindungsgemäße Vorrichtung wird im Folgenden näher beschrieben.

Es zeigen im Einzelnen:
- Fig.1:: eine perspektivische Darstellung eines Behälters
- Fig.2:: eine perspektivische Detail - Darstellung der Transportvorrichtungen
- Fig.3:: einen Querschnitt aus dem Bodenbereich des Behälters
- Fig.4:: eine Darstellung der Funktion der Entnahmevorrichtung
- Fig.5:: eine perspektivische Darstellung des Antriebs der Transportbänder
- Fig.6:: eine Draufsicht der Transportbänder
- Fig.7:: eine 1.Variante der Lagerung der Glasscheiben im Speicher
- Fig.8:: eine Seitenansicht einer 2.Variante des Antriebs der Transportbänder
- Fig.9:: eine Vorderansicht der 2.Variante des Antriebs der Transportbänder

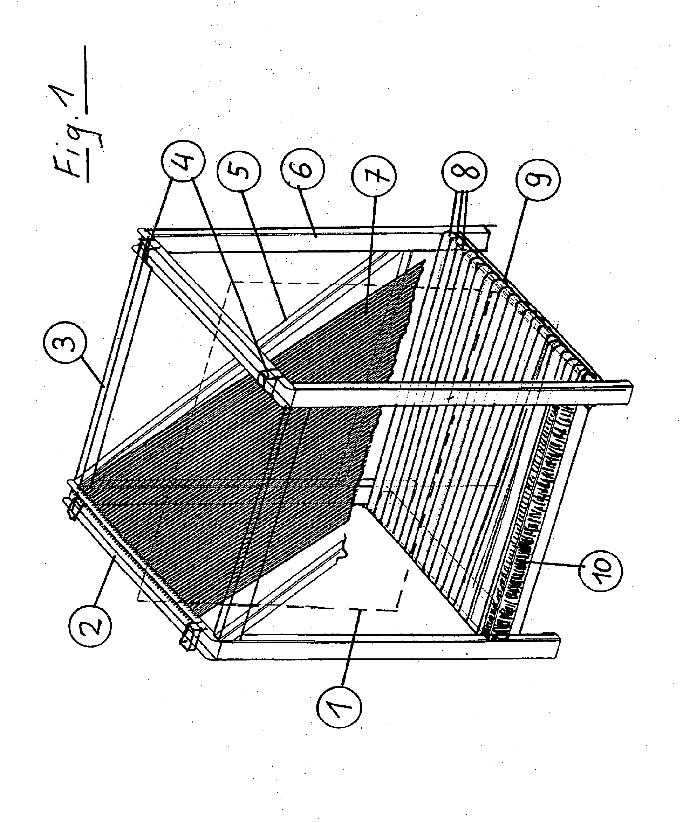

Fig.1 zeigt eine perspektivische Darstellung eines Behälters der mit Produkten aus einzelnen Glasscheiben oder einem Verbund von einzelnen Glasscheiben im Rahmen der Herstellung von, zum Beispiel, TFT - Bildschirmen oder photovoltaischen Modulen beladen werden kann.

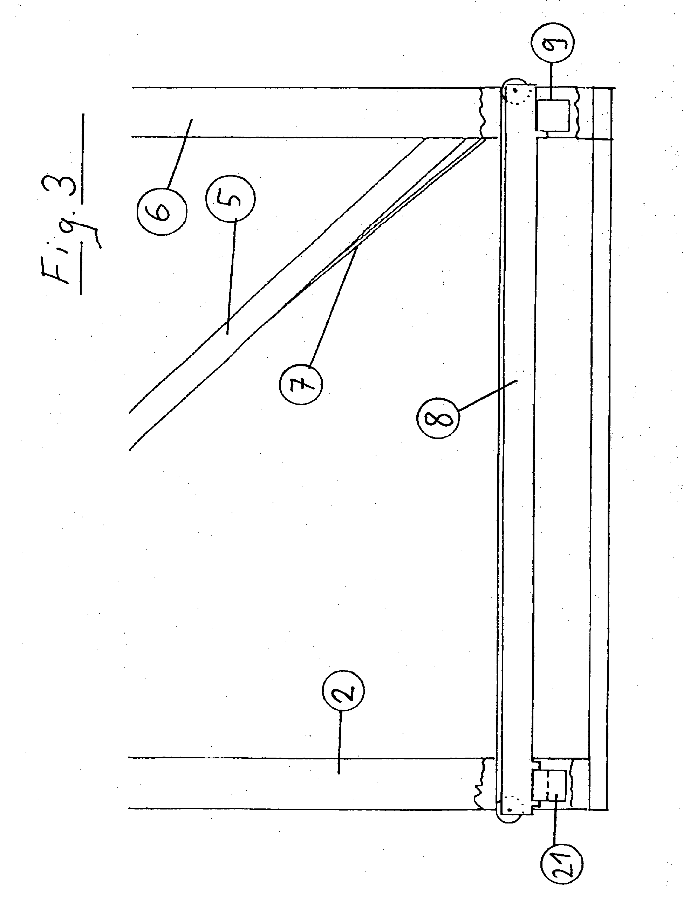

Ein solcher Behälter besteht im Wesentlichen aus einem hinteren Portal ( 2 ) und einem vorderen Portal ( 6 ), die durch zwei obere Längsstreben ( 3 ) und zwei untere Längsstreben ( 10 ) miteinander verbunden und über einen oder mehrere, schräg zu den Portalen verlaufenden, Stabilisatoren verbunden sind. In der Fig. 1 ist, aus Gründen der Verdeutlichung und der Unterscheidung von dem nächst liegenden Transportband ( 8 ), die vorne liegende untere Längsstrebe ( 10 ) durch eine feine Strichlierung markiert. Im Wesentlichen in der Richtung des gezeigten Stabilisators ( 5 ) verlaufend sind in der Fig.1 eine Anzahl von Trennspeichen ( 7 ) dargestellt, die jedoch aus Gründen der besseren Erkennung der Transportbänder ( 8 ) nicht bis an ihr Ende weitergeführt sind. Die Transportbänder ( 8 ) verlaufen parallel zu den unteren Längsstreben ( 10 ) und ihre Zwischenräume werden über die Trennspeichen ( 7 ) abgeteilt. Zur Verdeutlichung der Lage der im Gehäuse gelagerten Glasscheiben ist in der Fig. 1 eine Glasscheibe ( 1 ) mit gestrichelten Außenkanten eingezeichnet. Die parallel angeordneten Laufbänder ( 8 ) sind auf der Vorderseite auf dem Auflagerträger ( 9 ) gelagert. Nähere Einzelheiten zu der Lagerung der Laufbänder ( 8 ) sind der Fig. 3 zu entnehmen.

Die am Gehäuse angebrachten Transportlaschen ( 4 ) dienen dem Transport des gesamten Gehäuses. Sie sind lediglich am vorderen Portal bezeichnet, befinden sich aber genauso am hinteren Portal, wie der Fig. 1 zu entnehmen ist.

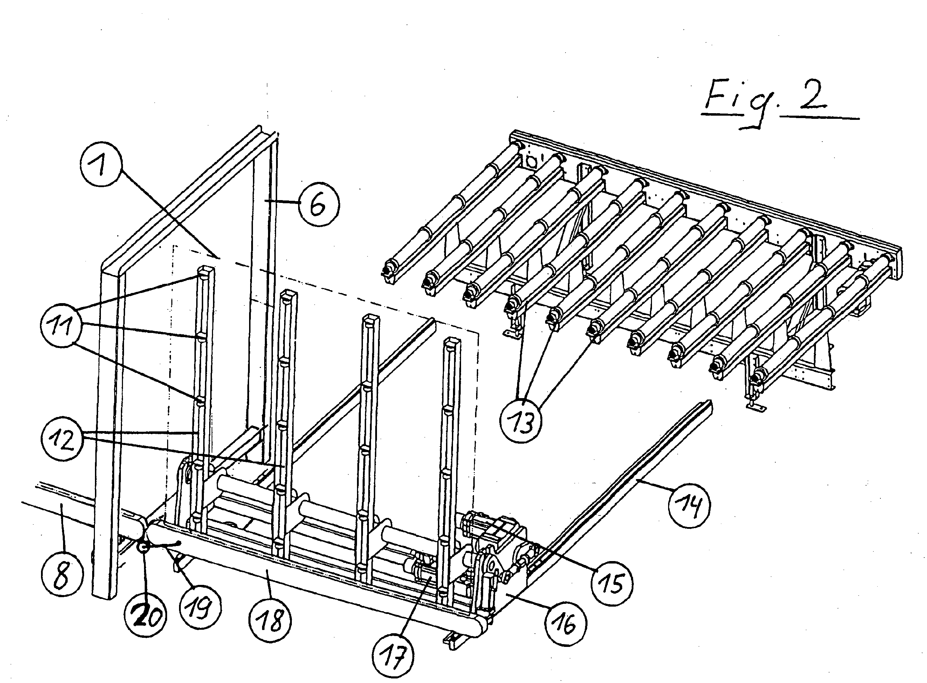

Die Fig.2 zeigt eine perspektivische Detail - Darstellung der Transportvorrichtungen die dazu beitragen eine Glasscheibe ( 1 ) in den in der Fig.1 gezeigten Behälter zu befördern.

Im oberen hinteren Bereich sind die Rollen ( 13 ) eines Rollenförderers dargestellt, auf dem die jeweilige Glasscheibe ( 1 ) in horizontaler Lage herangefahren wird. Parallel zu der Richtung der Laufrollen ( 13 ) des Rollenförderers verlaufen die am Boden befestigten Laufschienen ( 14 ) des Verschiebeschlittens ( 16 ) des Vertikalverstellers. Dieser kann die von dem Rollenförderer in horizontaler Lage angelieferten Glasscheiben ( 1 ) ebenfalls in horizontaler Lage übernehmen und dann in eine vertikale Lage verschwenken.

Der Antrieb ( 17 ) des Verschiebeschlittens ( 16 ) gewährleistet hierbei, dass der Verschiebeschlitten ( 16 ) mit den Auflagegabeln ( 12 ) zwischen die Rollen ( 13 ) des Rollenförderers hinein fahren kann und durch ein Zurückfahren eine Glasscheibe ( 1 ) vom Rollenförderer übernehmen kann. Dies kann durch ein leichtes Anheben der Auflagegabeln ( 12 ) im Bereich des Rollenförderers geschehen.

Hat der Vertikalversteller eine Glasscheibe ( 1 ) auf die horizontal verschwenkten Auflagegabeln ( 12 ) übernommen, kommt diese auf den Fixierungsmitteln ( 11 ) zum Liegen. Diese Fixierungsmittel (11) bestehen aus einem abriebfesten reinraumtauglichen Material, das ein Verrutschen der Glasscheibe ( 1 ) verhindert. Im Bereich der Fixierungsmittel ( 11 ) sind Sensoren ( 25 ) angeordnet die die Unversehrtheit der aufliegenden Glasscheibe ( 1 ) überwachen. Zu diesem Zweck können zum Beispiel Sensoren eingesetzt werden, die eine ungewöhnliche, für einen Glasbruch charakteristische, Lichtbrechung an Bruchstellen erfassen und an die Eingabeeinheit des Steuerungsprogramms melden. In diesem Fall kann die betreffende Glasscheibe ( 1 ) zum Beispiel über den Rollenförderer zurückbefördert werden oder mittels Saugnäpfen und einer gesonderten Transportvorrichtung einer Entsorgung zugeführt werden. Die Wahl der entsprechenden Sensoren ( 25 ) richtet sich nach der Art der jeweils transportierten Glasscheibe ( 1 ) oder dem Verbund an Glasscheiben ( 1 ).

Der Verschiebeschlitten ( 16 ) transportiert dann die jeweilige Glasscheibe ( 1 ) an die betreffende Stelle des Behälters, die hierfür vorgesehen ist.

Durch den Antrieb ( 15 ) des Vertikalverstellers wird die Glasscheibe ( 1 ) dann in eine nahezu vertikale, leicht geneigte, Position verschwenkt und steht somit auf der Quertransportvorrichtung ( 18 ).

Sie besteht aus einem endlosen Transportband das über zwei innenliegende Rollen am Anfang und am Ende der Vorrichtung ( 18 ) läuft. Der Antrieb dieses Bandes ist mit ( 17 ) bezeichnet..

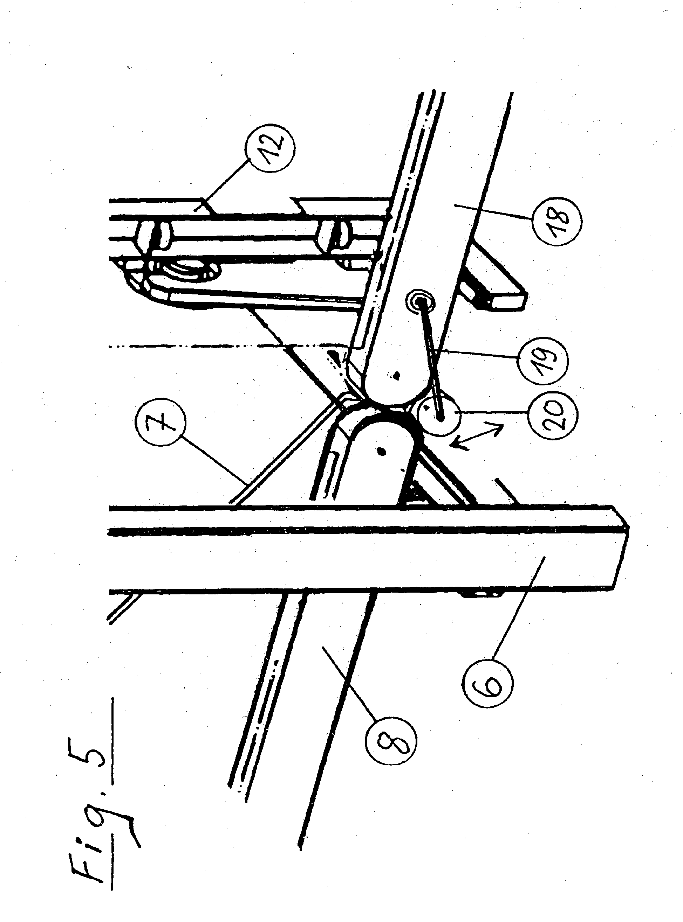

Im Bereich der dem Behälter zugewandten Seite der Quertransportvorrichtung ( 18 ) ist ein Kipphebel ( 19 ) angebracht, der an seinem freien Ende ein Kraftübertragungsrad ( 20 ) trägt. Mittels dieser Vorrichtung lässt sich bei dem gesteuerten Eingriff des Kraftübertragungsrades ( 20 ) die Bewegung des Laufbandes der Quertransportvorrichtung ( 18 ) auf das jeweilige Transportband ( 8 ) übertragen. Auf diese Weise ist gewährleistet, dass eine Glasscheibe ( 1 ) kontinuierlich und stoßfrei vom Verschiebeschlitten ( 16 ) in den Behälter transportiert werden kann. Eine nähere Darstellung hierzu findet sich in der Fig.5.

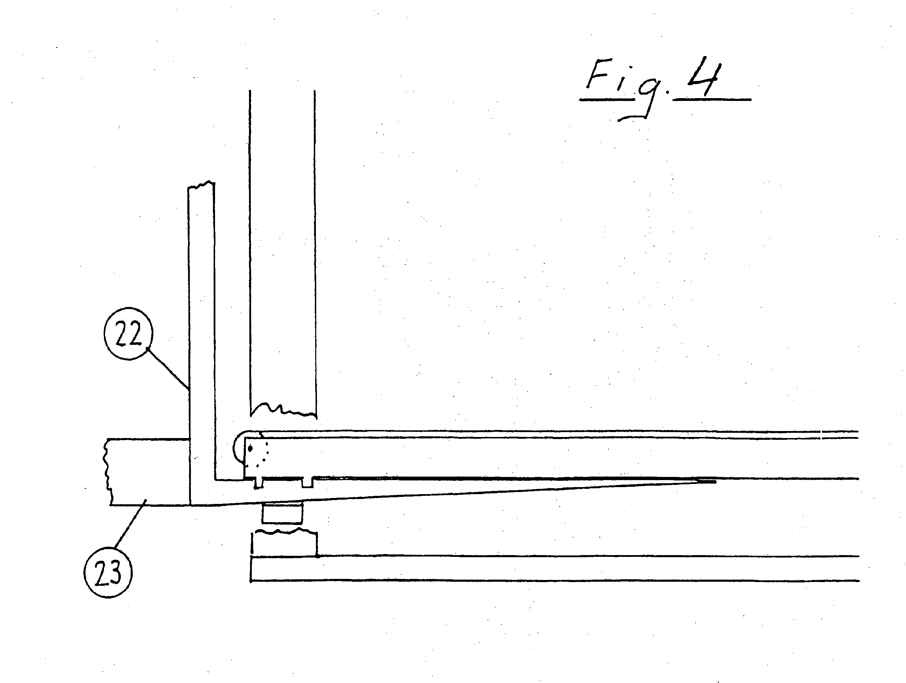

Zur Detektion des Zustandes des Behälterfaches in das eine Glasscheibe ( 1 ) transportiert wird, oder aus diesem geholt wird, dienen die Sensoren ( 24 ). Diese Sensoren ( 24 ) befinden sich an der Längsseite der Auflagegabel ( 12 ) die dem Behälter am Nächsten liegt. Diese Auflagegabel ( 12 ) trägt auch Sensoren nach der Art der Sensoren ( 25 ) zur Erfassung von defekten Glasscheiben ( 1 ) die sich in einem Behälterfach befinden. Zu diesem Zweck lassen sich Sensoren verwenden die auf der Basis von Licht - Effekten arbeiten oder es können Ultraschallsensoren zum Einsatz kommen. Bei der Auswahl der Sensoren ( 24 ) und ( 25 ) bleibt dem Fachmann die Auswahl für den jeweiligen Anwendungszweck überlassen. Das Entfernen von defekten Glasscheiben ( 1 ) aus einem Behälterfach ist in der Fig.4 beschirieben.

Fig.3 zeigt einen Querschnitt aus dem Bodenbereich des Behälters. Es sind hier wieder im Querschnitt das hintere Portal ( 2 ), das vordere Portal (6 ), der Stabilisator ( 5 ) und eine Trennspeiche ( 7 ) zu erkennen. Im Bereich des vorderen Portals ( 6 ) sind im Querschnitt der Auflagerträger ( 9 ) und im Bereich des hinteren Portals ( 2 ) der Auflagerträger ( 21 ) dargestellt. Auf diesen beiden Auflagerträgern liegen die Transportbänder ( 8 ) parallel nebeneinander auf. Aus der Fig.3 ist auch zu ersehen, dass jedes Transportband ( 8 ) für sich genommen eine Einheit darstellt, die, durch Nocken lösbar arretiert, aus dem Behälter ohne Behinderung der anderen Transportbänder ( 8 ) entfernt werden kann.

Den Raum zwischen zwei nebeneinander liegenden Transportbändern ( 8 ) nimmt jeweils eine Trennspeiche ( 7 ) ein.

Fig.4 zeigt eine Darstellung der Funktion der Entnahmevorrichtung.

Wie schon bei der Beschreibung der Fig.3 erklärt wurde, kann jedes Transportband ( 8 ) für sich genommen aus dem Behälter entfernt werden. Dies ist in dem Fall notwendig in dem Sensoren ( 25 ) feststellen, dass sich in einem bestimmten Behälterfach eine defekte Glasscheibe ( 1 ) befindet. In der Fig.4 ist dargestellt wie mittels einer Entnahmevorrichtung ( 23 ) die eine Greifvorrichtung in der Form eines rechtwinkeligen Zinkens ( 22 ) trägt, ein beliebiges Transportband ( 8 ) mit einer darauf befindlichen Glasscheibe ( 1 ) aus dem Behälter entfernt werden kann. Damit eine herausgenommene Glasscheibe ( 1 ) nicht seitlich kippen kann, sind an dem oberen Teil des Zinkens ( 22 ) links und rechts in der Breite eines Behätterfachs Streben angebracht, die jedoch in der Fig.4 aus Gründen einer klaren Darstellung nicht eingezeichnet wurden. Die Betätigung der Entnahmevorrichtung ( 23 ) kann über einen Mehrachs - Roboter erfolgen.

Fig. 5 zeigt eine perspektivische Darstellung des Antriebs der Transportbänder ( 8 ). Es sind hier ein Teil des vorderen Portals ( 6 ), eine Trennspeiche ( 7 ), die dem Behälter am nächsten angeordnete Auflagegabel ( 12 ) und ein Transportband ( 8 ) zu erkennen. Eine auf dem Quertransportband ( 18 ) stehende Glasscheibe ( 1 ) ist in den Umrissen gestrichelt dargestellt. Das, die jeweilige Glasscheibe ( 1 ) tragende und diese bewegende endlose Transportband der Quertransportvorrichtung ( 18 ) trägt an seiner Oberseite im Wesentlichen quer verlaufende Stollen und wird von dem Antrieb ( 17 ) angetrieben. Wird das Kraftübertragungsrad ( 20 ) von dem Kipphebel ( 19 ) in Eingriffsposition gedrückt, überträgt es die von dem Transportriemen der Quertransportvorrichtung ( 18 ) aufgebrachte Kraft auf das Transportband ( 8 ). Dies ist natürlich nur mögüch wenn beide Bänder dieselbe Struktur der Stollen aufweisen und das Kraftübertragungsrad ( 20 ) an seiner Oberfläche ebenfalls an diese Struktur angepasste Stollen aufweist. Am Bespiel der Fig.5 bewegt sich das Transportband der Quertransportvorrichtung ( 18 ) von rechts nach links um eine Glasscheibe ( 1 ) in den Behälter zu befördern. Das Kraftübertragungsrad ( 20 ) dreht sich folglich im Uhrzeigersinn und treibt das Transportband ( 8 ) in dieselbe Richtung in die der Transportriemen der Quertransportvorrichtung ( 18 ) läuft, nämlich in das Innere des Behälters. Ein Endschalter registriert das Erreichen der Endposition der Glasplatte ( 1 ). Der Kipphebel ( 19 ) des Kraftübertragungsrades ( 20 ) weist zwei Stellungen auf die von dem Steuerungsprogramm der gesamten Anlage, zu der der Behälter gehört, gesteuert werden.

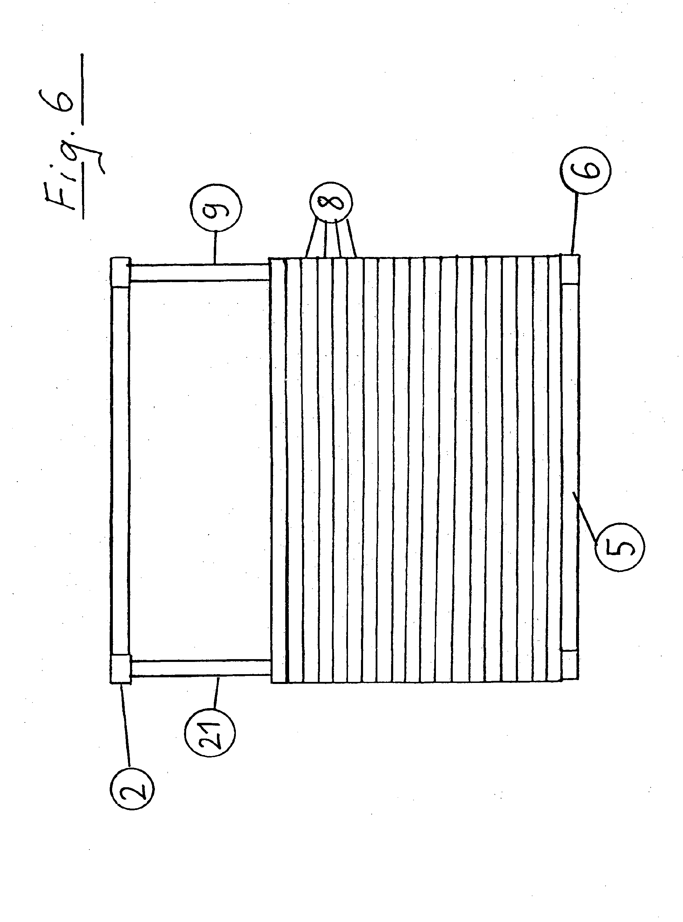

Fig.6 zeigt eine Draufsicht auf die Lage der Transportbänder ( 8 ). Von oben sind hier das hintere Portal ( 2 ), das vordere Portal ( 6 ) und ein Stabilisator ( 5 ) zu erkennen. Deutlich ist hier die Lage des vorderen Auflagerträger ( 9 ) und der hintere Auflagerträger ( 21 ) in Bezug zur Konstruktion des Behälters dargestellt.

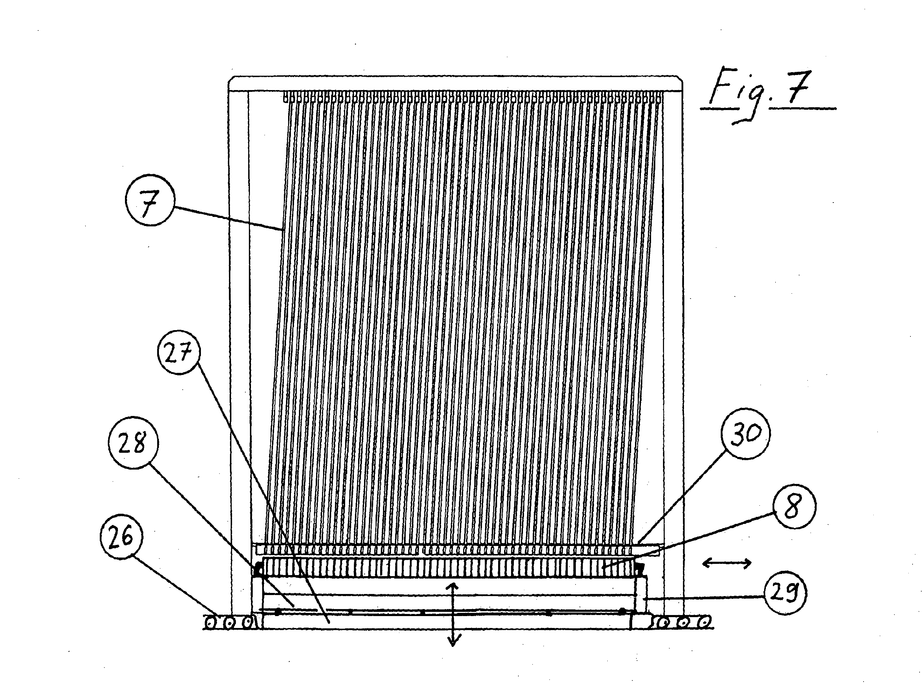

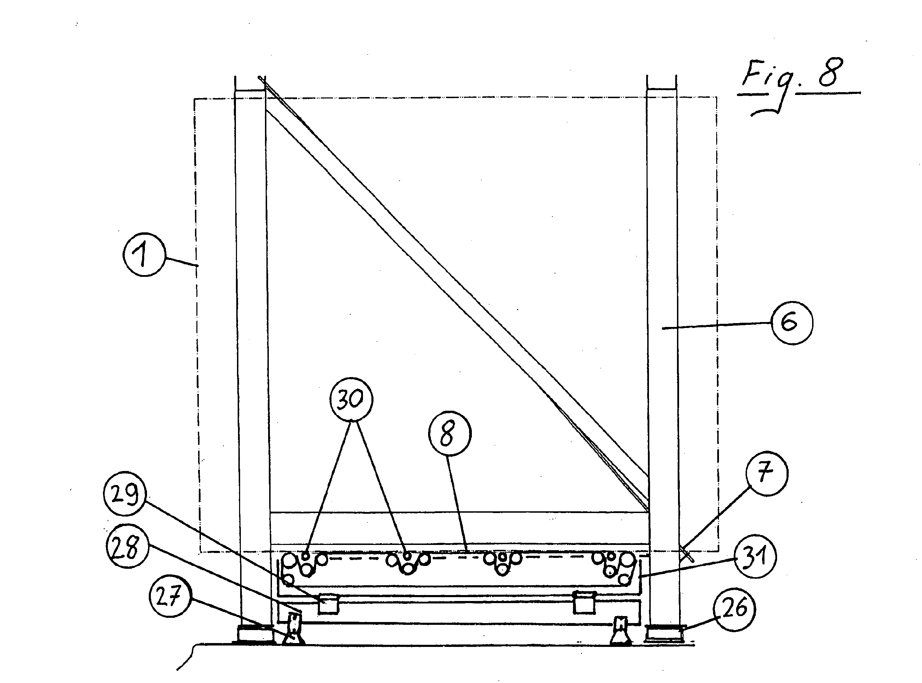

Die Fig.7 zeigt eine 1.Variante der Lagerung der Glasscheiben im Speicher auf Auflageträgern ( 30 ).Es kann sich dabei um Achsen, Achstücke oder Rollen handeln. Hier sind wieder die schräg stehenden Trennspeichen ( 7 ) und die entsprechenden Transportbänder ( 8 ) von vorne dargestellt. Der gesamte Speicher kann auf der Fahrbahn ( 26 ) verfahren werden. Unterhalb des Speichers ist eine zusätzliche Fahrbahn ( 27 ) für eine Transportbandlafette ( 28 ) vorgesehen, wie sie aus der Seitenansicht der Fig.8 zu erkennen ist. Die im Schnitt gezeigten Auflageträger ( 30 ) für die Glasscheiben sind aus der Fig.8 deutlicher zu erkennen. Der in vertikaler Richtung verlaufende Doppelpfeil deutet die Vertikalverstellung bzw. Möglichkeit der Anhebung oder der Absenkung eines Transportband - Gehäuses ( 31 ) mittels der Hebevorrichtung ( 29 ) an. Die Transportbandlafette ( 28 ) wird bei dieser Vorrichtung jeweils unter das jeweilige Transportband ( 8 ) gefahren und das Transportband - Gehäuse ( 31 ) wird zum Transport der betreffenden Glasscheibe in den Speicher oder aus dem Speicher angehoben. Da bei einer Aktion der Anhebung oder der Absenkung des Transportband - Gehäuses ( 31 ) mittels der Hebevorrichtungen ( 29 ) die Lage dieser Auflageträger ( 30 ) dies ersichtlich verhindern würde, wird das Transportband ( 8 ) jeweils um den betreffenden Auflageträger ( 30 ) herumgeleitet. Dies ist aus der Darstellung der Fig.8 deutlich zu erkennen. Der Antrieb des jeweiligen Transportbands ( 8 ) erfolgt wiederum über ein Kraftübertragungsrad ( 20 ) von der Quertransportvorrichtung ( 18 ), wie bei der Erläuterung zur Fig.5 beschrieben.

Die Fig. 8 zeigt eine Seitenansicht einer 2. Variante des Antriebs der Transportbänder ( 8 ). Das vordere Portal ( 6 ) befindet sich dabei auf der rechten Seite, was auch aus der Lage der Trennspeichen ( 7 ) zu erkennen ist. Aus dieser Ansicht ist zu sehen, dass eine Glasscheibe ( 1 ) im Ruhezustand auf den Auflageträgern ( 30 ) ruht. Da bei einer Aktion der Anhebung oder der Absenkung des Transportband - Gehäuses ( 31 ) mittels der Hebevorrichtungen ( 29 ) die Lage dieser Auflageträger ( 30 ) dies ersichtlich verhindern würde, wird das Transportband ( 8 ) jeweils um den betreffenden Auflageträger ( 30 ) herumgeleitet. In der Seitenansicht der Fig.8 ist das in vierfacher Weise dargestellt. Die beiden Hebevorrichtungen ( 29 ) vorne und hinten am Transportband - Gehäuse ( 31 ), bzw. rechts und links in der Fig.8, bewegen sich mit der Transportbandlafette ( 28 ) auf der Fahrbahn ( 27 ). Auch hier ist mit dem Bezugszeichen ( 26 ) die Möglichkeit der Verfahrung des gesamten Speichers dargestellt.

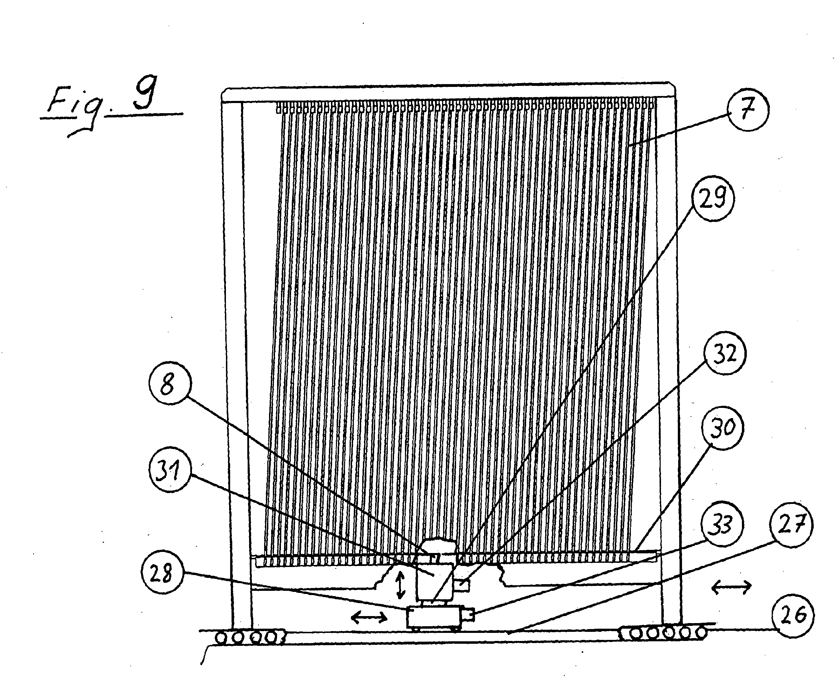

In der Fig.9 ist eine Vorderansicht der 2.Variante des Antriebs der Transportbänder aufgezeigt.

Auch hier ist der Speicher wieder von vorne mit den Trennspeichen ( 7 ) und den Transportbändern ( 8 ), einem Auflageträger ( 30 ) für Glasscheiben, sowie einem in besonderer Weise heraus gezeichneten Transportband ( 8 ) zu erkennen. Zu diesem Zweck ist an der betreffenden Stelle ein " Ausschnitt " in der Struktur der Trennspeichen ( 7 ) eingefügt.

Auf der Fahrbahn ( 27 ) bewegt sich die Transportbandlafette ( 28 ), die ein Transportband - Gehäuse ( 31 ) trägt. Zwischen der Transportbandlafette ( 28 ) und dem Transportband - Gehäuse ( 31 ) ist eine Hebevorrichtung ( 29 ) angeordnet. In dem Transportband - Gehäuse ( 31 ) befindet sich ein eigener Antrieb ( 32 ) für das Transportband. In diesem Fall erfolgt der Antrieb der Transportbänder ( 8 ) somit nicht mittels des Kraftübertragungsrades ( 20 ) von der Quertransportvorrichtung ( 18 ), sondern eigenständig. Die Transportbandlafette ( 32 ) bewegt sich mittels eines eigenen Antriebs ( 33 ) der die Lafette entsprechend dem horizontalen Doppelpfeil über den gesamten Bereich der Transportbänder ( 8 ) verfahren kann. Auch der Speicher selbst ist über die Fahrbahn ( 26 ), wie gezeigt, verfahrbar.

Die interaktive Steuerung des Verschiebeschlittens ( 16 ), des zuführenden Rollenförderers, des Vertikalverstellers und der Elemente des Quertransports der Glasscheiben ( 1 ) in Verbindung mit der eigenen Erfassung und Fehlerdetektierung der Glasscheiben ( 1 ), die Überwachung der Positionierung der Glasscheiben ( 1 ) über Laser und / oder Sensoren im Rahmen einer Herstellung von photovoltaischen Elementen oder TFT - Bildschirmen erfordert ein spezielles Steuerungsprogramm. Die Anlagenteile die die verschiedenen Varianten der Lagerung bzw. des Antriebs der Transportbänder betreffen erfordern ein weiteres Steuerungsprogramm, das in das Haupt-Steuerungsprogramm integriert sein kann.

Es versteht sich für den Fachmann von selbst, dass die erfindungsgemäße Vorrichtung, bzw. das erfindungsgemäße Verfahren, zwar speziell für Reinraumbedürfnisse konzipiert wurde, aber im Wesentlichen natürlich auch in normalen Anlagen zur Anwendung kommen kann.

Die erfindungsgemäße Vorrichtung bzw. das erfindungsgemäße Verfahren ist zwar bevorzugt für das Beladen eines Containers mit großflächigen dünnen Glasscheiben ausgelegt, jedoch ist für den Fachmann ersichtlich, dass ein derartiger Container auch mit kleineren und / oder relativ dicken Glasscheiben beladen werden kann,

### Bezugszeichenliste

- ( 1 ): Glasscheibe
- ( 2 ): hinteres Portal ( hinteres Portal )
- ( 3 ): obere Längsstrebe ( Grundrahmen )
- ( 4 ): Transportlaschen
- ( 5 ): Stabilisator
- ( 6 ): vorderes Portal ( Grundrahmen )
- ( 7 ): Trennspeichen
- ( 8 ): Transportband
- ( 9 ): Auflagerträger für Transportbänder
- ( 10 ): untere Längsstrebe ( Grundrahmen )
- ( 11 ): Fixierungsmittel einer Glasplatte
- ( 12 ): Auflagegabel
- ( 13 ): Rollen ( Rollenförderer )
- ( 14 ): Laufschienen des Vertikalverstellers
- ( 15 ): Antrieb des Vertikalverstellers
- ( 16 ): Verschiebeschlitten
- ( 17 ): Antrieb des Verschiebeschlittens
- ( 18 ): Quertransportvorrichtung für Beladung und Entladung
- ( 19 ): Kipphebel des Kraftübertragungsrades
- ( 20 ): Kraftübertragungsrad
- ( 21 ): Auflageträger des Transportbands
- ( 22 ): Zinken der Entnahmevorrichtung
- ( 23 ): Entnahmevorrichtung
- ( 24 ): Sensor für Beladung und Entladung
- ( 25 ): Sensor für Übernahme
- ( 26 ): Fahrbahn des Speichers
- ( 27 ): Fahrbahn für eine Transportbandlafette
- ( 28 ): Transportbandlafette
- ( 29 ): Hebevorrichtung für ein Transportband
- ( 30 ): Auflageträger für Glasscheiben
- ( 31 ): Transportband - Gehäuse
- ( 32 ): Transportbandantrieb
- ( 33 ): Antrieb der Transportbandlafette

## Patentansprüche

1. Vorrichtung zum Beladen eines Behälters mit Produkten, die aus einzelnen großflächigen dünnen Glasscheiben (1) zusammengesetzt sind oder einzelnen Glasscheiben (1), insbesondere photovoltaischen Modulen, TFT - Bildschirmen oder Bestandteilen von diesen, mit den folgenden Merkmalen:
a) Mittel zum Heranführen jeweils einzelner Glasscheiben (1) oder von Produkten, die aus verschiedenen Glasscheiben (1) zusammengesetzt sind,
b) einem Vertikalversteller mit einem Verschiebeschlitten (16) und Auflagegabeln (12), wobei der Vertikalversteller Auflagegabeln (12) aufweist, die mit Fixierungsmitteln (11) für eine Glasscheibe (1), Sensoren (25) zur Detektion von Glasbruch und Sensoren (26) zur Erkennung des Belegungszustandes eines Behälterfaches ausgestattet sind,
c) einer Quertransportvorrichtung (18) zum Laden und Beladen,
d) einer Vorrichtung zur Kraftübertragung von der Quertransportvorrichtung (18) auf jeweils ein Transportband (8) des Behälters, wobei das Transportband (8) des Behälters-mittels eines über einen Kipphebel (19) zuschaltbaren Kraftübertragungsrades (20) von der Quertransporteinrichtung (18) angetrieben wird.

2. Vorrichtung nach Anspruch 1,
**dadurch gekennzeichnet,**
**dass** jedes Transportband (8) mittels einer Entnahmevorrichtung (23) aus dem Behälter entfernt werden kann.

3. Vorrichtung nach Anspruch 1,
**dadurch gekennzeichnet,**
**dass** die jeweilige Glasscheibe (1) auf Auflageträgern (30) gelagert ist und mittels eines Transportbandes (8), das mittels eines über einen Kipphebel (19) zuschaltbaren Kraftübertragungsrades (20) von der Quertransportvorrichtung (18) angetrieben wird, im Behälter ausgefahren oder eingefahren wird, wobei die der Glasscheibe (1) zugewandte Seite des Transportbandes (8) an den Stellen der Auflageträger (30) eine Bandführung aufweist, die die Auflageträger (30) ausspart.

4. Vorrichtung nach Anspruch 1,
**dadurch gekennzeichnet,**
**dass** die jeweilige Glasscheibe (1) auf Auflageträgern (30) gelagert ist und mittels eines Transportbandes (8), das, mittels eines gesonderten Antriebs (22) von einer selbsttätig verfahrbaren Transportlafette (26) in Verbindung mit einer Hebevorrichtung (29) angetrieben, im Behälter ausgefahren oder eingefahren wird, wobei die der Glasscheibe (1) zugewandte Seite des Transportbandes (8) an den Stellen der Auflageträger (30) eine Bandführung aufweist, die die Auflageträger (30) ausspart.

5. Vorrichtung nach einem der vorhergehenden Ansprüche,
**dadurch gekennzeichnet,**
**dass** zur Verwendung in Reinräumen alle bewegbaren Elemente als Teil einer großräumigen Fabrikanlage aus abriebgeschütztem Material bestehen und alle Antriebe hinsichtlich des Abriebs bewegter Teile emissionsgeschützt sind.

6. Vorrichtung nach einem der vorhergehenden Ansprüche,
**dadurch gekennzeichnet,**
**dass** alle relevanten Parameter des Fertigungsprozesses mittels Sensoren erfasst und zur Steuerung des Fertigungsprozesses verwendet werden.

7. Verfahren zum Beladen eines Behälters mit Produkten, die aus einzelnen großflächigen dünnen Glasscheiben (1) zusammengesetzt sind oder einzelnen Glasscheiben (1), insbesondere photovoltaischen Modulen, TFT - Bildschirmen oder Bestandteilen von diesen, mit den folgenden Merkmalen:
a) es werden Mittel zum Heranführen jeweils einzelner Glasscheiben (1) oder von Produkten, die aus verschiedenen Glasscheiben (1) zusammengesetzt sind, insbesondere Rollenförderer, eingesetzt,
b) die Glasscheiben (1) werden von horizontal ausgerichteten Auflagegabeln (12) eines auf einem Verschiebeschlitten (16) horizontal verfahrbaren Vertikalverstellers aufgenommen und an ein bestimmtes Ladefach des Behälters verfahren, wobei die Auflagegabeln (12) mit Fixierungsmitteln (11) für eine Glasscheibe (1), Sensoren (25) zur Detektion von Glasbruch und Sensoren (26) zur Erkennung des Belegungszustandes eines Behälterfaches ausgestattet sind,
c) die Glasscheiben (1) werden von dem Vertikalversteller in eine im Wesentlichen vertikale Lage verschwenkt,
d) die Glasscheiben (1) werden von einer Quertransportvorrichtung (18) des Vertikalverstellers auf einem endlosen Transportriemen in die Richtung des Ladefaches verschoben und dort von einem Transportband (8) bis an das Ende des Ladefachs befördert, wobei das Transportband (8) des Behälters mittels eines über einen Kipphebel (19) zuschaltbaren Kraftübertragungsrades (20) von der Quertransporteinrichtung (18) angetrieben wird.

8. Verfahren nach Anspruch 7,
**dadurch gekennzeichnet,**
**dass** jedes Transportband (8). mittels einer Entnahmevorrichtung (23) aus dem Behälter entfernt werden kann.

9. Verfahren nach Anspruch 7,
**dadurch gekennzeichnet,**
**dass** die jeweilige Glasscheibe (1) auf Auflageträgern (30) gelagert ist und mittels eines Transportbandes (8), das mittels eines über einen Kipphebel (19) zuschaltbaren Kraftübertragungsrades (20) von der Quertransportvorrichtung (18) angetrieben wird, im Behälter ausgefahren oder eingefahren wird, wobei die der Glasscheibe (1) zugewandte Seite des Transportbandes (8) an den Stellen der Auflageträger (30) eine Bandführung aufweist, die die Auflageträger (30) ausspart.

10. Verfahren nach Anspruch 7,
**dadurch gekennzeichnet,**
**dass** die jeweilige Glasscheibe (1) auf Auflageträgern (30) gelagert ist und mittels eines Transportbandes (8), das, mittels eines gesonderten Antriebs (22) von einer selbsttätig verfahrbaren Transportlafette (26) in Verbindung mit einer Hebevorrichtung (29) angetrieben, im Behälter ausgefahren oder eingefahren wird, wobei die der Glasscheibe (1) zugewandte Seite des Transportbandes (8) an den Stellen der Auflageträger (30) eine Bandführung aufweist, die die Auflageträger (30) ausspart.

11. Verfahren nach einem der Ansprüche 7 bis 10,
**dadurch gekennzeichnet,**
**dass** zur Verwendung in Reinräumen alle bewegbaren Elemente, als Teil einer großräumigen Fabrikanlage, aus abriebgeschütztem Material bestehen und alle Antriebe hinsichtlich des Abriebs bewegter Teile emissionsgeschützt sind.

12. Verfahren nach einem der Ansprüche 7 bis 11,
**dadurch gekennzeichnet,**
**dass** alle relevanten Parameter des Fertigungsprozesses mittels Sensoren erfasst und zur Steuerung des Fertigungsprozesses verwendet werden.

## Claims

1. Device for loading a container with products made up of individual thin sheets of glass (1) of a large surface area or with individual sheets of glass (1), in particular photovoltaic modules, TFT screens or component parts thereof, comprising the following features:
a) means for respectively bringing into place individual sheets of glass (1) or products made up of various sheets of glass (1),
b) a vertical adjuster with a displacement carriage (16) and supporting forks (12), wherein the vertical adjuster has supporting forks (12), which are equipped with fixing means (11) for a sheet of glass (1), sensors (25) for detecting glass breakage and sensors (26) for identifying the occupancy state of a container compartment,
c) a transverse conveying device (18) for loading, and
d) a device for transmitting force from the transverse conveying device (18) to a respective conveyor belt (8) of the container, wherein the conveyor belt (8) of the container is driven by means of a force transmission wheel (20), which can be connected up via a rocker lever (19), of the transverse conveying device (18).

2. Device according to Claim 1,
**characterized**
**in that** each conveyor belt (8) can be removed from the container by means of a removal device (23) .

3. Device according to Claim 1,
**characterized**
**in that** the respective sheet of glass (1) is supported on support members (30) and is extended or retracted in the container by means of a conveyor belt (8), which is driven by means of a force transmission wheel (20), which can be connected up via a rocker lever (19), of the transverse conveying device (18), wherein
that side of the conveyor belt (8) which faces toward the sheet of glass (1) has, at the locations of the support members (30), a belt guide, which leaves the support members (30) clear.

4. Device according to Claim 1,
**characterized**
**in that** the respective sheet of glass (1) is supported on support members (30) and is extended or retracted in the container by means of a conveyor belt (8), which is driven by means of a separate drive (22) of an automatically movable conveying mount (26) in conjunction with a lifting device (29), wherein that side of the conveyor belt (8) which faces toward the sheet of glass (1) has, at the locations of the support members (30), a belt guide, which leaves the support members (30) clear.

5. Device according to one of the preceding claims,
**characterized**
**in that**, for use in clean rooms, all movable elements, as part of a large-scale plant, consist of abrasion-protected material, and all drives are emission protected in terms of the abrasion of moving parts.

6. Device according to one of the preceding claims,
**characterized**
**in that** all relevant parameters of the production process are detected by means of sensors and used to control the production process.

7. Method for loading a container with products made up of individual thin sheets of glass (1) of a large surface area or with individual sheets of glass (1), in particular photovoltaic modules, TFT screens or component parts thereof, comprising the following features:
a) use is made of means for respectively bringing into place individual sheets of glass (1) or products made up of various sheets of glass (1), in particular a roller conveyor,
b) the sheets of glass (1) are received by horizontally oriented supporting forks (12) of a vertical adjuster, which can move horizontally on a displacement carriage (16), and are moved to a specific loading compartment of the container, wherein the supporting forks (12) are equipped with fixing means (11) for a sheet of glass (1), sensors (25) for detecting glass breakage and sensors (26) for identifying the occupancy state of a container compartment,
c) the sheets of glass (1) are pivoted into a substantially vertical position by the vertical adjuster, and
d) the sheets of glass (1) are displaced by a transverse conveying device (18) of the vertical adjuster on an endless transporting belt in the direction of the loading compartment, where they are conveyed by a conveyor belt (8) to the end of the loading compartment, wherein the conveyor belt (8) of the container is driven by means of a force transmission wheel (20), which can be connected up via a rocker lever (19), of the transverse conveying device (18).

8. Method according to Claim 7,
**characterized**
**in that** each conveyor belt (8) can be removed from the container by means of a removal device (23) .

9. Method according to Claim 7,
**characterized**
**in that** the respective sheet of glass (1) is supported on support members (30) and is extended or retracted in the container by means of a conveyor belt (8), which is driven by means of a force transmission wheel (20), which can be connected up via a rocker lever (19), of the transverse conveying device (18), wherein that side of the conveyor belt (8) which faces toward the sheet of glass (1) has, at the locations of the support members (30), a belt guide, which leaves the support members (30) clear.

10. Method according to Claim 7,
**characterized in that** the respective sheet of glass (1) is supported on support members (30) and is extended or retracted in the container by means of a conveyor belt (8), which is driven by means of a separate drive (22) of an automatically movable conveying mount (26) in conjunction with a lifting device (29), wherein that side of the conveyor belt (8) which faces toward the sheet of glass (1) has, at the locations of the support members (30), a belt guide, which leaves the support members (30) clear.

11. Method according to one of Claims 7 to 10,
**characterized**
**in that**, for use in clean rooms, all movable elements, as part of a large-scale plant,
consist of abrasion-protected material, and all drives are emission protected in terms of the abrasion of moving parts.

12. Method according to one of Claims 7 to 11,
**characterized**
**in that** all relevant parameters of the production process are detected by means of sensors and used to control the production process.

## Revendications

1. Dispositif pour charger un contenant avec des produits qui sont constitués de feuilles de verre (1) individuelles larges et fines, ou de feuilles de verre individuelles (1), notamment de modules photovoltaïques, TFT, - des écrans ou des constituants de ceux-ci, comprenant les caractéristiques suivantes :
a) des moyens pour approcher à chaque fois des feuilles de verre (1) individuelles ou des produits qui sont constitués de différentes feuilles de verre (1),
b) un dispositif de réglage vertical avec un chariot coulissant (16) et des fourches d'appui (12), le dispositif de réglage vertical présentant des fourches d'appui (12), qui sont munies de moyens de fixation (11) pour une feuille de verre (1), de capteurs (25) pour détecter un bris de verre et de capteurs (26) pour reconnaître l'état d'occupation d'un compartiment du contenant,
c) un dispositif de transport transversal (18) pour charger et décharger,
d) un dispositif de transfert de force du dispositif de transport transversal (18) à une bande transporteuse respective (8) du contenant, la bande transporteuse (8) du contenant étant entraînée par le dispositif de transport transversal (18) au moyen d'une roue de transfert de force (20) pouvant être connectée par le biais d'un levier basculant (19).

2. Dispositif selon la revendication 1,
**caractérisé en ce que**
chaque bande transporteuse (8) peut être enlevée du contenant au moyen d'un dispositif d'enlèvement (23) .

3. Dispositif selon la revendication 1,
**caractérisé en ce que**
la feuille de verre respective (1) est supportée sur des supports d'appui (30) et est sortie ou rentrée dans le contenant au moyen d'une bande transporteuse (8) qui est entraînée par le dispositif de transport transversal (18) au moyen d'une roue de transfert de force (20) pouvant être connectée par le biais d'un levier basculant (19), le côté de la bande transporteuse (8) tourné vers la feuille de verre (1) présentant, à l'endroit des supports d'appui (30), un guidage de bande qui laisse libres les supports d'appui (30).

4. Dispositif selon la revendication 1,
**caractérisé en ce que**
la feuille de verre respective (1) est supportée sur des supports d'appui (30) et est sortie ou rentrée dans le contenant au moyen d'une bande transporteuse (8) qui est entraînée au moyen d'un entraînement séparé (22) par une plate-forme de transport déplaçable automatiquement (26) conjointement avec un dispositif de levage (29), le côté de la bande transporteuse (8) tourné vers la feuille de verre (1) présentant, à l'endroit des supports d'appui (30), un guidage de bande qui laisse libres les supports d'appui (30).

5. Dispositif selon l'une quelconque des revendications précédentes,
**caractérisé en ce que**,
pour l'utilisation dans des salles propres, tous les éléments déplaçables, en tant que partie d'une grande installation d'usine, se composent de matériau protégé contre l'abrasion et tous les entraînements sont protégés contre les émissions en rapport avec l'abrasion de pièces mobiles.

6. Dispositif selon l'une quelconque des revendications précédentes,
**caractérisé en ce que**
tous les paramètres pertinents du processus de fabrication sont détectés au moyen de capteurs et sont utilisés pour commander le processus de fabrication.

7. Procédé pour charger un contenant avec des produits qui sont constitués de feuilles de verre (1) individuelles larges et fines, ou de feuilles de verre individuelles (1), notamment de modules photovoltaïques, TFT, - des écrans ou des constituants de ceux-ci, comprenant les caractéristiques suivantes :
a) des moyens pour approcher à chaque fois des feuilles de verre (1) individuelles ou des produits qui sont constitués de différentes feuilles de verre (1), en particulier des transporteurs à rouleaux, sont utilisés,
b) les feuilles de verre (1) sont reçues par des fourches d'appui (12) orientées horizontalement d'un dispositif de réglage vertical déplaçable horizontalement sur un chariot coulissant (16) et sont déplacées au niveau d'un compartiment de chargement déterminé du contenant, les fourches d'appui (12) étant munies de moyens de fixation (11) pour une feuille de verre (1), de capteurs (25) pour détecter un bris de verre et de capteurs (26) pour reconnaître l'état d'occupation d'un compartiment du contenant,
c) les feuilles de verre (1) sont pivotées par le dispositif de réglage vertical dans une position essentiellement verticale,
d) les feuilles de verre (1) sont déplacées par un dispositif de transport transversal (18) du dispositif de réglage vertical sur une courroie de transport sans fin dans la direction du compartiment de chargement et sont transportées de là par une bande transporteuse (8) jusqu'à la fin du compartiment de chargement, la bande transporteuse (8) du contenant étant entraînée par le dispositif de transport transversal (18) au moyen d'une roue de transfert de force (20) pouvant être connectée par le biais d'un levier basculant (19).

8. Procédé selon la revendication 7,
**caractérisé en ce que**
chaque bande transporteuse (8) peut être enlevée du contenant au moyen d'un dispositif d'enlèvement (23) .

9. Procédé selon la revendication 7,
**caractérisé en ce que**
la feuille de verre respective (1) est supportée sur des supports d'appui (30) et est sortie ou rentrée dans le contenant au moyen d'une bande transporteuse (8) qui est entraînée par le dispositif de transport transversal (18) au moyen d'une roue de transfert de force (20) pouvant être connectée par le biais d'un levier basculant (19), le côté de la bande transporteuse (8) tourné vers la feuille de verre (1) présentant, à l'endroit des supports d'appui (30), un guidage de bande qui laisse libres les supports d'appui (30).

10. Procédé selon la revendication 7,
**caractérisé en ce que**
la feuille de verre respective (1) est supportée sur des supports d'appui (30) et est sortie ou rentrée dans le contenant au moyen d'une bande transporteuse (8) qui est entraînée au moyen d'un entraînement séparé (22) par une plate-forme de transport déplaçable automatiquement (26) conjointement avec un dispositif de levage (29), le côté de la bande transporteuse (8) tourné vers la feuille de verre (1) présentant, à l'endroit des supports d'appui (30), un guidage de bande qui laisse libres les supports d'appui (30).

11. Procédé selon l'une quelconque des revendications 7 à 10,
**caractérisé en ce que**,
pour l'utilisation dans des salles propres, tous les éléments déplaçables, en tant que partie d'une grande installation d'usine, se composent de matériau protégé contre l'abrasion et tous les entraînements sont protégés contre les émissions en rapport avec l'abrasion de pièces mobiles.

12. Procédé selon l'une quelconque des revendications 7 à 11,
**caractérisé en ce que**
tous les paramètres pertinents du processus de fabrication sont détectés au moyen de capteurs et sont utilisés pour la commande du processus de fabrication.
